# EUROPEAN PATENT APPLICATION

(11) **EP 3 228 848 A1**
(43) Date of publication of application: **11.10.2017**
(21) Application number: 17164272.1
(22) Date of filing: 31.03.2017
(51) Int. Cl.: F02C 9/48, F02C 9/00, F02C 3/30

(54) **USE OF A GAS TURBINE HEATED FLUID FOR REDUCTANT VAPORIZATION**

(30) Priority: 06.04.2016 US 201615092386
(71) Applicant: General Electric Company, Schenectady, NY 12345 (US)
(72) Inventor: KIPPEL, Bradly Aaron, Greenville, SC South Carolina 29615 (US); FRESE, Christopher Conrad, Greenville, SC South Carolina 29615 (US)
(74) Representative: Lee, Brenda

(57) **Abstract**

A system includes a gas turbine engine 12 that may combust a fuel to generate power and an exhaust gas, an exhaust gas path 42 in fluid communication with the gas turbine engine and that may receive the exhaust gas from the gas turbine engine, and a reductant skid 65 fluidly coupled to the exhaust gas path. The reductant skid includes an injection system 74 that may supply a reductant to the exhaust gas path. The system also includes a flow path separate from the exhaust gas path and fluidly coupling the gas turbine engine and the reductant skid. The first flow path may supply a first heated fluid to the reductant skid to aid in vaporization of the reductant.

## Description

### BACKGROUND OF THE INVENTION

The subject matter disclosed herein relates to turbine systems and, more specifically, to systems and methods for providing heat to a reductant vaporization system of the gas turbine system.

Gas turbine systems typically include at least one gas turbine engine having a compressor, a combustor, and a turbine. The combustor is configured to combust a mixture of fuel and compressed air to generate hot combustion gases, which, in turn, drive blades of the turbine. Exhaust gas produced by the gas turbine engine may include certain byproducts, such as nitrogen oxides (NOₓ), sulfur oxides (SOₓ), carbon oxides (COₓ), and unburned hydrocarbons. Certain treatment systems associated with such gas turbine systems may function to remove or substantially reduce the amount of such byproducts in the exhaust gas before releasing the exhaust gas from the system.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a gas turbine engine that may combust a fuel to generate power and an exhaust gas, an exhaust gas path in fluid communication with the gas turbine engine and that may receive the exhaust gas from the gas turbine engine, and a reductant skid fluidly coupled to the exhaust gas path. The reductant skid includes an injection system that may supply a reductant to the exhaust gas path. The system also includes a flow path separate from the exhaust gas path and fluidly coupling the gas turbine engine and the reductant skid. The first flow path may supply a first heated fluid to the reductant skid to aid in vaporization of the reductant.

In a second embodiment, a system includes a gas turbine engine that may combust a fuel and to generate an exhaust gas, an exhaust gas path that may receive the exhaust gas from the gas turbine engine, and a reductant skid fluidly coupled to the exhaust gas path. The reductant skid includes a heating system that may vaporize a reducing agent and an injection system that may supply the vaporized reducing agent to the exhaust gas path. The system also includes a first flow path separate from the exhaust gas path and fluidly coupling a first section of the gas turbine engine and the reductant skid. The first flow path may supply a first heated fluid to the reductant skid, and a second flow path separate from the exhaust gas path and the first flow path. The second flow path is fluidly coupled to a second section of the gas turbine engine and to the reductant skid, and the second flow path may supply a second heated fluid to the reductant skid.

In a third embodiment, a method includes flowing a first fluid from a first section of a gas turbine engine through a first flow path fluidly coupling the first section to a reductant skid. The reductant skid is fluidly coupled to an exhaust flow path that may receive exhaust gas generated in the gas turbine engine. The method also includes heating the reductant skid using the first fluid, flowing a second fluid through a second flow path fluidly coupling a second section of the gas turbine engine to the reductant skid to supplement or replace the first fluid, and vaporizing a reductant within the reductant skid with the second fluid.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of a gas turbine system including a reductant injection system for heating a reductant used for selective catalytic reduction, in accordance with an embodiment of the present disclosure;
FIG. 2 is a schematic representation of the reductant injection system of FIG. 1 including a flow control system that receives compressor discharge air from a gas turbine engine and directs the compressor discharge air to a heating system within the reductant injection system, in accordance with an embodiment of the present disclosure;
FIG. 3 is a diagram of the reductant injection system of FIG. 1 including a flow control system that receives compressor discharge air and/or an exhaust gas stream from a gas turbine engine and directs the compressor discharge air and/or the exhaust gas stream to a heating system within the reductant injection system, in accordance with an embodiment of the present disclosure;
FIG. 4 is a diagram of the reductant injection system of FIG. 1 including a heat exchanger that heats a flow of compressor discharge air upstream of a heating system of the reductant injection system, in accordance with an embodiment of the present disclosure;
FIG. 5 is a diagram of the reductant injection system of FIG. 1 including a flow control system that receives compressor discharge air, ambient air, and/or an exhaust gas stream and directs the compressor discharge air, the ambient air, and/or the exhaust gas stream to a heating system within the reductant injection system, in accordance with an embodiment of the present disclosure;
FIG. 6 is a flow diagram of a method of heating the reductant injection system and vaporizing the reductant of the gas turbine system of FIG. 1, in accordance with an embodiment of the present disclosure; and
FIG. 7 is a flow diagram of a method of heating a fluid used to heat the reductant injection system and vaporize the reductant using a heat exchanger disposed within the reductant injection system of FIG. 1, in accordance with an embodiment of the present disclosure.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments are generally directed toward techniques for integrating a reductant vaporization system (e.g., an ammonia injection system) with a compressor discharge flow path and vaporizing a reductant used for selective catalytic reduction of an exhaust gas stream generated in a gas turbine engine. For example, in gas turbine systems, one or more gas turbine engines may combust a fuel/oxidant mixture to produce combustion gases for driving one or more turbine stages, each having a plurality of blades. Depending on a number of factors, such as the type of fuel that is combusted as well as various combustion parameters, combustion products resulting from the combustion process may include nitrogen oxides (NOₓ), sulfur oxides (SOₓ), carbon oxides (COₓ), and unburned hydrocarbons. Certain types of catalytic systems may function to reduce a level of these components before the exhaust gases exit the gas turbine system, such as a gas turbine power generation plant. It may be desirable to perform such reduction while also maintaining efficient operation of the gas turbine system.

One technique for removing or reducing the amount of NOₓ in an exhaust gas stream is by Selective Catalytic Reduction (SCR). In an SCR process, a reagent (e..g, reductant), such as ammonia (NH₃) is injected into the exhaust gas stream and reacts with the NOₓ in the exhaust gas in the presence of a catalyst to produce nitrogen (N₂) and water (H₂O).

To facilitate this process, a reductant injection system may be used to heat, vaporize, and inject the reagent into the exhaust gas stream. Vaporizing the reagent before injecting into the exhaust gas stream may facilitate mixing of the exhaust gas stream and the reagent while also reducing the temperature difference between the exhaust gas stream and the reductant. During start-up of the gas turbine system, the reductant injection system may be at or below ambient temperature. As such, the reagent may condense within the vaporization system after vaporization until the reductant injection system is at a suitable temperature to block condensation of the reagent. Accordingly, electric heaters are generally used to heat the vaporization system.

In certain gas turbine systems, in particular systems having large frame heavy duty gas turbine engines (e.g., gas turbine engines having a megawatt range greater than 50 megawatts (mW) such as non-Areo derivative gas turbine engines), the heaters may increase the overall operational and manufacturing costs of the gas turbine system. For example, depending on the size of the gas turbine engine, the gas turbine system may include one or more heaters sized to provide sufficient heat to the reductant injection system. These heaters may be relatively large to accommodate the temperature requirements for heating the reductant injection system. For example, the heaters used to heat the reductant injection system may have a power output of approximately 750 kilowatts (kW) to 1 megawatt (mW).

Providing the electricity required to operate the heaters may result in an undesirable parasitic loss that may decrease the efficiency of the gas turbine system. For example, the heaters may result in a parasitic loss of between approximately 500 kW and approximately 750 kW. Therefore, it may be desirable to use other sources of heat that do not result in an undesirable parasitic loss while efficiently and effectively heating the reductant injection system, thereby blocking condensation of the reagent within the reductant injection system during start-up of the gas turbine system.

In accordance with present embodiments, the reductant injection system may be heated using one or more fluid streams generated in the gas turbine system. The one or more fluid streams may be used during start-up and steady-state operation of the gas turbine system to heat the reductant injection system and vaporize the reagent upstream of the SCR. The reductant injection system may include one or more flow control systems to adjust a flow and temperature of the fluid streams within the vaporization system. The reductant injection system may include sensors that transmit signals to a control system that controls various components of the flow control systems (e.g., valves, pumps, etc.) based on a pressure and/or temperature of the fluid streams, the reductant, or a combination thereof.

It is now recognized that the fluid streams from the gas turbine engine may be at a temperature suitable for heating fluids within the reductant injection system to mitigate or eliminate the use of heaters, thereby providing heat without increasing the energy requirements of the gas turbine system compared to gas turbine system that use the large heaters. That is, because the fluid streams are already heated as part of the operation of the gas turbine system, the fluid streams provide "free" heat to the reductant injection system. Therefore, the large heaters generally used to heat the reductant injection system and/or vaporize the reagent in certain gas turbine systems may be replaced by hot fluids (e.g., compressor discharge air, exhaust gas, etc.) generated in the gas turbine engine. Consequently, the parasitic loss and operational and manufacturing costs of the gas turbine system generally associated with the use of the large heaters may be decreased.

As discussed in further detail below, embodiments of the present disclosure include a gas turbine system, such as a simple cycle heavy-duty gas turbine system, having an reductant injection system configured to receive one or more fluid streams from a gas turbine engine to vaporize a reagent used to treat an exhaust gas stream, and to mitigate condensation of the reagent in the reductant injection system during start-up of the gas turbine system. The reductant injection system may be disposed downstream (e.g., relative to the flow of exhaust gases) of a turbine, but upstream of an SCR system. For example, the reductant injection system may include heating and air injection features disposed within an exhaust duct of the gas turbine engine system. The reductant injection system may be in fluid communication with various sections of the gas turbine engine such that the reductant injection system may receive one or more fluids from the gas turbine engine. Fluidly coupling the reductant injection system with one or more sections of the gas turbine engine may allow the reductant injection system to use heated fluids generated in the gas turbine engine to vaporize the reagent and mitigate condensation of the reagent during start-up of the gas turbine system rather than using large electric heaters. Accordingly, the efficiency of the gas turbine system may be increased due, in part, to a decrease in the parasitic loss resulting from the use of the large electric heaters in certain gas turbine systems. While the presently disclosed techniques may be particularly useful in simple cycle heavy-duty gas turbine systems, it should be understood that the present embodiments may be implemented in any suitably configured system, including combined cycle gas turbine systems, for example.

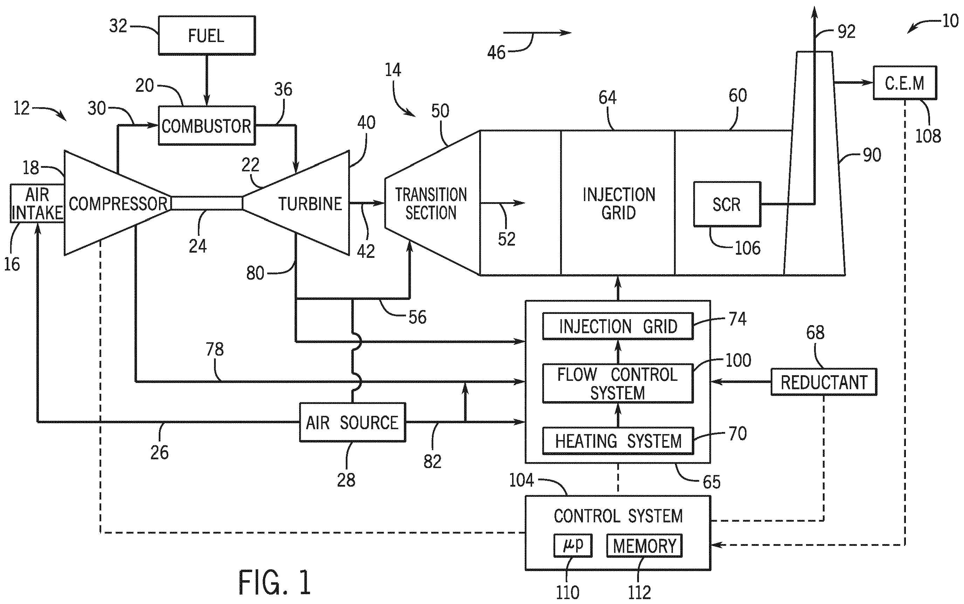

With the foregoing in mind, FIG. 1 is a schematic diagram of an example turbine system 10 that includes a gas turbine engine 12 and an exhaust processing system 14. In certain embodiments, the turbine system 10 may be all or part of a power generation system. The gas turbine system 10 may use liquid or gas fuel, such as natural gas and/or a hydrogen-rich synthetic gas, to run the gas turbine system 10.

As shown, the gas turbine engine 12 includes an air intake section 16, a compressor 18, a combustor section 20, and a turbine 22. The turbine 22 may be drivingly coupled to the compressor 18 via a shaft 24. In operation, air enters the turbine engine 12 through the air intake section 16 (indicated by the arrow 26) and is pressurized in the compressor 18. The air 26 may be provided by one or more air sources 28 (e.g., including but not limited to ambient air). In certain embodiments, the air 26 may flow through a filter and/or a silencer disposed between the compressor 18 and the air source 28. The compressor 18 may include a plurality of compressor stages coupled to the shaft 24. Each stage of the compressor 18 includes a wheel with a plurality of compressor blades. The rotation of the shaft 24 causes rotation of the compressor blades, which draws air into the compressor 18 and compresses the air 26 to produce compressed air 30, most of which is directed to the combustor section 20.

The combustor section 20 may include one or more combustors. In one embodiment, a plurality of combustors may be disposed at multiple circumferential positions in a generally circular or annular configuration about the shaft 24. As the compressed air 30 exits the compressor 18 and enters the combustor section 20, the compressed air 30 may be mixed with fuel 32 for combustion within the combustor. For example, the combustor section 20 may include one or more fuel nozzles that may inject a fuel-air mixture into the combustor in a suitable ratio for optimal combustion, emissions, fuel consumption, power output, and so forth. The combustion of the air 30 and fuel 32 may generate hot pressurized exhaust gases 36 (e.g., combustion gases), which may then be utilized to drive one or more turbine blades within the turbine 22. In operation, the combustion gases flowing into and through the turbine 22 flow against and between the turbine blades, thereby driving the turbine blades and, thus, the shaft 24 into rotation to drive a load, such as an electrical generator in a power plant. As discussed above, the rotation of the shaft 24 also causes blades within the compressor 18 to draw in and pressurize the air received by the intake 16.

The combustion gases that flow through the turbine 22 may exit a downstream end 40 of the turbine 22 as a stream of exhaust gas 42. The exhaust gas stream 42 may continue to flow in a downstream direction 46 towards the exhaust processing system 14. For instance, the downstream end 40 of the turbine 22 may be fluidly coupled to the exhaust processing system 14 and, particularly, to a transition duct 50. In certain embodiments, the exhaust processing system 14 may include an exhaust diffuser upstream of the transition duct 50.

As discussed above, as a result of the combustion process, the exhaust gas stream 42 may include certain byproducts, such as nitrogen oxides (NOₓ), sulfur oxides (SOₓ), carbon oxides (COₓ), and unburned hydrocarbons. The exhaust processing system 14 may be employed to reduce or substantially minimize the concentration of such byproducts before the exhaust gas stream exits the system 10. As mentioned above, one technique for removing or reducing the amount of NOₓ in an exhaust gas stream involves using a Selective Catalytic Reduction (SCR) process. For example, in an SCR process for removing NOₓ from the exhaust gas stream 42, ammonia (NH₃) is injected into the exhaust gas stream and reacts with the NOₓ in the presence of a catalyst to produce nitrogen (N₂) and water (H₂O).

The effectiveness of this SCR process may be at least partially dependent upon the temperature of the exhaust gas that is processed. For instance, the SCR process for removing NOₓ may be particularly effective at temperatures of approximately 500 to 900 degrees Fahrenheit (°F) (e.g., approximately 260 to 482 degrees Celsius (°C)). In certain embodiments, however, the exhaust gas stream 42 exiting the turbine 22 and entering the transition duct 50 may have a temperature of approximately 1000 to 1500 °F (e.g., approximately 538 to 816 °C) or, more specifically, 1100 to 1200 °F (e.g., approximately 593 to 649 °C). Accordingly, to increase the effectiveness of the SCR process for NOₓ removal, the exhaust processing system 14 may cool the exhaust gas stream 42 by injecting cooling air into the exhaust gas stream 42 in the transition duct 50, thereby generating cooled exhaust gas stream 52. For instance, in one embodiment, the transition duct 50 may receive air from the air source 28, as shown by arrow 56. The air source 28 may include one or more air blowers, compressors (e.g., compressor 18), heat exchangers, or a combination thereof to facilitate cooling the air to generate the cooling air 56 supplied to the transition duct 50. As will be appreciated, the term "cooling," when used to describe the air flow 58, should be understood to mean that the air 58 is cooler relative to the exhaust gas stream 42 exiting the turbine 22. It should be understood that the effective temperatures may vary depending on the element being removed from the gas stream 42 and/or the catalyst being employed.

Referring still to FIG. 1, the cooled exhaust gas stream 52 may continue flowing downstream (e.g., in direction 46) into an exhaust duct 60, where ammonia injection grid (AIG) 64 injects a reductant 68 (e.g., aqueous ammonia (NH₃)) into the cooled exhaust gas stream 52. An ammonia injection system 65 associated with the AIG 64 may include a heating system 70 and an injection system 74 that vaporize and inject, respectively, the reductant 68 into the cooled exhaust gas stream 52 in the exhaust duct 60. In one embodiment, the injection system 74 may lead to or otherwise include a network of pipes that ultimately lead to openings forming the AIG 64 for injecting the reductant 68 into the cooled exhaust gas stream 52. As discussed in further detail below, the reductant 68 may be vaporized in the heating system 70 before flowing into the injection system 74.

As discussed above, the AIG of gas turbine engines may be at or below ambient temperature during start-up of the gas turbine system. Therefore, the ammonia injection system 65 (e.g., an ammonia skid) may be heated before vaporization of the reductant 68 to block condensation of the reductant 68 in the AIG after vaporization. Certain gas turbine system may use large electric heaters (e.g., electric heaters having a power output of approximately 750 kW to 1 mW) to distribute heat throughout the AIG, thereby heating the AIG to a temperature suitable for blocking condensation of the reductant after vaporization. However, the use of the large electric heaters may increase the energy requirements for operation of the gas turbine system (e.g., the gas turbine system may need to provide power to operate the large electric heaters) and the parasitic loss of the gas turbine system. It has now been recognize that heated fluids generated in the gas turbine engine during exhaust purge and combustion of fuel (e.g., the fuel 32) may be used to provide thermal energy to the AIG. As such, the heated fluids may heat the AIG without the use of the large electric heaters, and may also facilitate vaporization of the reductant (e.g., the reductant 68). Accordingly, as illustrated in FIG. 1, the ammonia injection system 65 may receive compressor discharge air 78 from the compressor 18, a portion 80 of the exhaust gas stream from the turbine 22, air from the air source 28, as shown by arrow 82, and combinations thereof.

For example, during shut-down of the gas turbine system 10, at least a portion of the exhaust gas stream 42 may remain within one or more sections of the gas turbine system 10 (e.g., in the turbine 22, exhaust processing system 14, etc.). Therefore, during start-up of the gas turbine system 10, the exhaust gas stream 42 remaining in the gas turbine system 10 from a previous cycle may be purged from the system 10. During purge of the exhaust gas from the gas turbine system 10, components of the gas turbine system 10 may be spinning at a speed that may increase a temperature of compressor discharge air to a temperature suitable for heating the ammonia injection system 65. For example, in certain embodiments, the spinning speed of the system components (e.g., the shaft 24) may be between approximately 15% and approximately 30% of a spinning speed of the system component during normal operation of the gas turbine system 10. The compressor discharge air may be cycled through the gas turbine system 10 to purge the exhaust gas stream 42 from the gas turbine system 10. For example, compressor discharge air may flow through the combustor 20 and the turbine 22 to purge the exhaust gas 36 from the gas turbine engine 10. As such, the exhaust gas stream 42 may flow in the downstream direction 46 through the exhaust processing system 14 and exit the gas turbine system 10 through a stack 90, as illustrated by arrow 92.

Due, in part, to the spinning speed of the shaft 24 during exhaust purge, the temperature of the compressor discharge air may increase to above approximately 150 °F (e.g., approximately 66 °C), such as between approximately 150 °F and approximately 300 °F (e.g., approximately 149 °C), between approximately 175 °F (e.g., approximately 79 °C) and approximately 275 °F (e.g., approximately 135 °C), and between approximately 200 °F (e.g., approximately 93 °C) and approximately 250 °F (e.g., approximately 121 °C). The temperature of the compressor discharge air may be suitable for heating the ammonia injection system 65 during start-up of the gas turbine system 10. Accordingly, present embodiments include flowing the compressor discharge air to the ammonia injection system 65, as illustrated by arrow 78. For example, at least a portion of the compressor discharge air 78 from the compressor 18 may bypass the combustor 18 and/or the turbine 22 of the gas turbine engine 12 and flow to the ammonia injection system 65, thereby heating system components (e.g., the heating system 70 and injection system 74) within the ammonia injection system 65. Therefore, the ammonia injection system 65 may be heated without the use of the large electric heaters generally used to heat ammonia injection systems in certain gas turbine systems. In certain embodiments, the air 82 from the air source 28 may be directed to the ammonia injection system 65 in addition to the compressor discharge air 78. The air 82 may decrease a temperature of the compressor discharge air 78, for example, in embodiments where the temperature of the compressor discharge air 78 exceeds a desired threshold temperature for heating the ammonia injection system 65.

Moreover, during steady-state operation of the gas turbine system 10, the at least a portion of the compressor discharge air 78, the portion of exhaust gas 80, the air 82, and combinations thereof may be used to vaporize the reductant 68 in the ammonia injection system 65. For example, as discussed above, the gas turbine engine 12 combusts a mixture of the compressed air 30 and the fuel 32 to generate hot exhaust gas 36. The exhaust gas 36 drives one or more turbine blades within the turbine 22 before flowing in the downstream direction 46 to the exhaust processing system 14. In one embodiment, the portion of the exhaust gas 80 may bypass the exhaust processing system 14 and flow to the ammonia injection system 65. While in the ammonia injection system 65, the exhaust gas 80 may heat and vaporize the reductant 68 before the reductant 68 is injected into the cooled exhaust gas stream 52 in the exhaust duct 60. The exhaust gas 80 may be mixed with the compressor discharge air 78 and/or the air 82 before, during, or after flowing into the ammonia injection system 65. As discussed above, exhaust gas exiting the turbine 22 may have a temperature of approximately 1000 to 1500 °F (e.g., approximately 538 °C to 816 °C). The temperature of the exhaust gas 80 may be above a desired temperature threshold for vaporization of the reductant 68. Therefore, the compressor discharge air 78 and/or the air 82 (e.g., ambient air) may be mixed with the exhaust gas 80 to cool the exhaust gas 80 to a temperature suitable for vaporization of the reductant 68.

In the illustrated embodiment, the ammonia injection system 65 includes a flow control system 100 that may be used to adjust a flow of the various fluids flowing through the ammonia injection system 65. For example, the flow control system 100 may include flow devices such as, but not limited to, valves, pumps, fans, and blowers that enable the compressor discharge air 78, the exhaust gas 80, the air 82, and/or the reductant 68 to flow through the ammonia injection system 65 and into the cooled exhaust gas stream 52 in the exhaust duct 60. As discussed in further detail below, a control system 104 may control operation of the flow control system 100 to adjust the flow of the various fluid streams through the injection system 74 and control a temperature of the fluid streams (e.g., the compressor discharge air 78 and the exhaust gas stream 80).

Downstream of the AIG 64, an SCR system 106 may include a supported catalyst system having any suitable geometry, such as a honeycomb or plate configuration. Within the SCR system 106, the reductant 68 reacts with the NOₓ in the cooled exhaust gas 52 to produce nitrogen (N₂) and water (H₂O), thus removing NOₓ from the cooled exhaust gas 52 prior to exiting the gas turbine system 10 through the stack 90, as indicated by the flow arrow 92. The stack 90, in some embodiments, may include a silencer or muffler. By way of non-limiting example, the exhaust processing system 14 may utilize the AIG 64 and the SCR system 106 to reduce the composition of NOₓ in the processed exhaust gas stream 86, to approximately 3 ppm or less.

While the present disclosure describes several embodiments directed to the processing and removal of NOₓ from the exhaust gas stream 42, 52, certain embodiments may provide for the removal of other combustion byproducts, such as carbon monoxide or unburned hydrocarbons. As such, the supplied catalyst may vary depending on the components being removed from the exhaust gas streams 42, 52. Additionally, it should be understood that the embodiments disclosed herein are not limited to the use of one SCR system 106, but may also include multiple SCR systems 106, multiple catalytic systems, and so forth.

To provide for control of emissions from the system 10, the system 10 may also include a continuous emissions monitoring (CEM) system 108 that continuously monitors the composition of the treated exhaust stream (e.g., the exhaust stream 86) exiting the stack 90. If the CEM system 108 detects that the composition of the treated exhaust stream is not within a predetermined set of parameters (e.g., temperature, pressure, concentration of certain combustion products), the CEM system 108 may provide notification to the control system 104 of the gas turbine engine 12, which may in turn take certain corrective actions to adjust combustion parameters, adjust flows of the cooling air 56 and/or the reductant 68, adjust operation of the SCR system 106, and so forth. Additionally or alternatively, the control system 104 of the gas turbine system 10 may perform functions such as notifying the operators of the system 10 to adjust operating parameters, perform service, or otherwise cease operating the system 10 until the treated exhaust stream produced by the system 10 has or is expected to have a composition that is within a predetermined requirement. In some embodiments, the CEM system 108 may also implement corrective actions specifically relating to the exhaust processing system 14 such as adjusting temperature, flow rates of cooling air 56, an amount of reductant 68 (e.g., NH₃) injected into SCR system 106, etc.

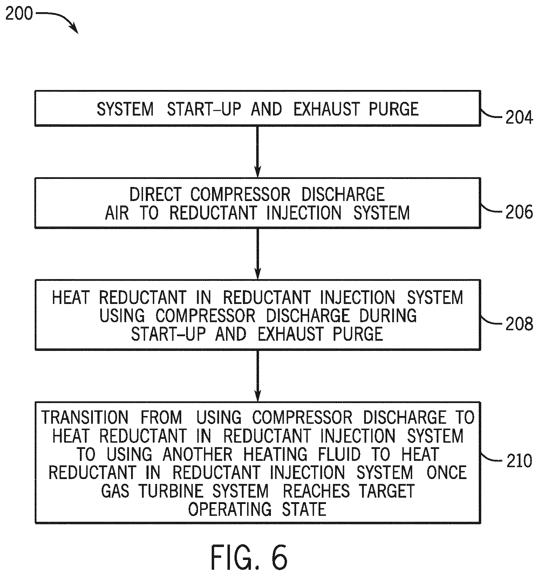

The control system 104 (e.g., an electronic and/or processor-based controller) may govern operation of the gas turbine system 10. The control system 104 may independently control operation of the gas turbine system 10 by electrically communicating with sensors, control valves, and pumps, or other flow adjusting features throughout the gas turbine system 10. The control system 104 may include a distributed control system (DCS) or any computer-based workstation that is fully or partially automated. For example, the control system 104 can be any device employing a general purpose or an application-specific processor, both of which may generally include memory circuitry 112 for storing instructions such as combustion parameters and reductant heating and vaporization parameters, among others. The processor may include one or more processing devices (e.g., microprocessor 110), and the memory circuitry 112 may include one or more tangible, non-transitory, machine-readable media collectively storing instructions executable by the processor to perform the acts of FIGS. 6-7, as discussed below, and control actions described herein.

In one embodiment, the control system 104 may operate flow control devices (e.g., valves, pumps, etc.) to control amounts and/or flows between the different system components. In the illustrated embodiment, the control system 104 controls operation of the flow control system 100 to control a flow of the reductant 68, compressor discharge air 78, exhaust gas 80, and/or air 82 through the ammonia injection system 65. For example, during start-up of the gas turbine system 104, the control system 104 may control a flow of the compressor discharge air 78 from the compressor 18 to the ammonia injection system 65 to heat components of the ammonia injection system 65 and block a flow of the reductant 68 until the ammonia injection system 65 is at a suitable temperature level to block condensation of the reductant 68 within the ammonia injection system 65. In addition, during steady-state operation of the gas turbine system 10, the control system 104 may control a flow of the exhaust gas 80 from the turbine 22 to the ammonia injection system 65 to facilitate heating and vaporization of the reductant 68. Steady-state operation of the gas turbine system 10 may be a state where the gas turbine engine 12 has reached a target loading and the operating parameters of the gas turbine engine 12 are controlled to maintain the gas turbine engine 12 at the target loading. In certain embodiments, the control system 104 may use information provided via one or more input signals (e.g., one or more input signals 138) from one or more sensors of the turbine system 10 to execute instructions or code contained on the memory 112 and generate one or more output signals (e.g., one or more output signals 140) to the various flow control devices (e.g., the flow control system 100) to control a flow of fluids within the gas turbine system 10. For example, the control system 104 may control the reductant 68, the compressor discharge air 78, the exhaust gas 80, and the air 82. In certain embodiments, the control system 104 may also control operation of valves to control an amount or adjust a flow of the air 26, the fuel 32, the cooling air 56, or any other fluid within the gas turbine system 10.

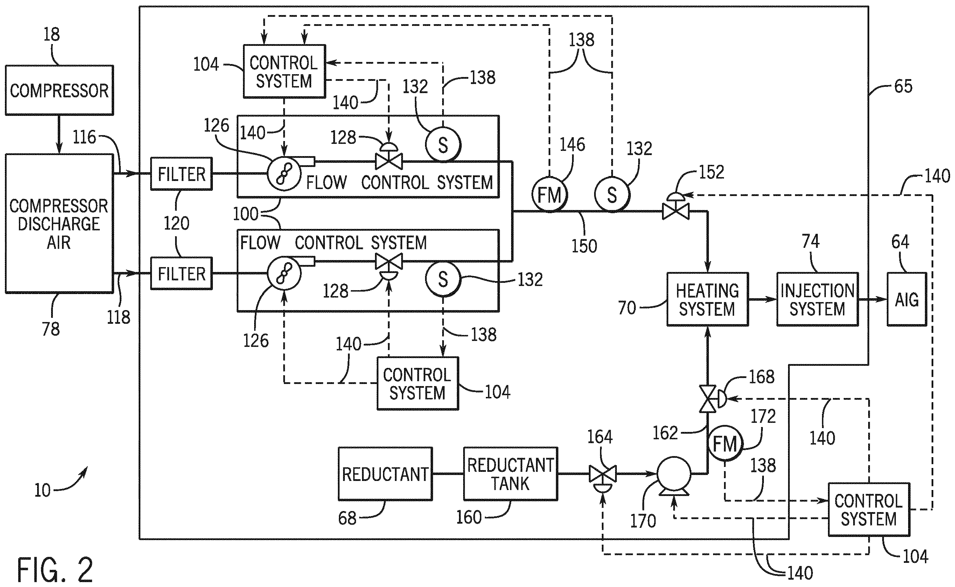

Referring now to FIG. 2, a diagram of the ammonia injection system 65 is illustrated. As discussed above, the ammonia injection system 65 may receive heated fluids from the gas turbine engine 12 to begin vaporization of the reductant 68, for example, during start-up of the gas turbine system 10. For example, in the illustrated embodiment, the ammonia injection system 65 receives the compressor discharge air 78 from the compressor 18. In embodiments where the system 10 is in a start-up mode of operation, there may be excess compressed air that may be used for heating components of the ammonia injection system 65. By way of example, the ammonia injection system 65 may include one or more conduits fluidly coupled to the gas turbine engine 12 that enable a flow of fluids (e.g., the compressor discharge air 78, exhaust gas 80) into the various components of the ammonia injection system 65 (e.g., the heating system 70). For example, the ammonia injection system 65 may include between 1 and 10 conduits such as 1, 2, 3, 4, 5, or more conduits. However, any suitable number of conduits may be used to flow heating fluids (e.g., the compressor discharge air 78, exhaust gas 80, and air 82) through the ammonia injection system 65. In the illustrated embodiment, the ammonia injection system 65 includes a first conduit 116 and a second conduit 118 that may receive the compressor discharge air 78 from the compressor 18. Therefore, in certain embodiments, a flow of the compressor discharge air 78 along a path extending from the compressor 18 to the ammonia injection system 65 may be split between the conduits 116, 118 (e.g., intermediate flow paths). In other embodiments, the compressor discharge air 78 may flow through either the first conduit 116 or the second conduit 118. For example, if the first conduit 116 is unavailable due to maintenance or repair, the compressor discharge air 78 may flow through the second conduit 118 such that the system 10 may continue to operate.

Several features may treat and/or control the flows of heating fluid into the ammonia injection system 65. In the illustrated embodiment, the conduits 116, 118 may each include a filtering unit 120 that may remove certain components (e.g., particulates) from the compressor discharge air 78. The flow control system 100 may be positioned along the conduits 116, 118 to control the flow of the compressor discharge air 78 through the ammonia injection system 65. For example, the flow control system 100 includes one or more flow devices that control the flow of the compressor discharge air 78 through the ammonia injection system 65. By way of non-limiting example, the one or more flow devices may include blowers, pumps, valves, or any other suitable flow devices that motivate and /or control a flow of the compressor discharge air 78 or other heating fluids through the ammonia injection system 65. Accordingly, in the illustrated embodiment, the flow control system 100 includes a blower 126 and a valve 128 positioned along each of the first and second conduits 116, 118. In addition to the blower 126 and the valve 128, the flow control system 100 may also include one or more sensors 132 to monitor fluid properties (e.g., temperature and/or pressure) of the compressor discharge air 78 (or other heating fluid). The sensor 132 may transmit an input signal 138 to the control system 104 indicative of the monitored fluid property of the compressor discharge air 78. In response to the input signal 138, the control system 104 may transmit an output signal 140 to the blower 126 and/or the valve 128 to adjust the flow of the compressor discharge air 78 or other heating fluid flowing through the conduit 116, 118.

A first flow meter 146 and an additional sensor 132 (e.g., pressure and/or temperature sensor) may be disposed downstream of the flow control system 100 along a flow path 150 extending from the flow control system 100 to the heating system 70. For example, after flowing through one, or both, of the conduits 116, 118, the compressor discharge air 78 is directed to the heating system 70 via the flow path 150. The first flow meter 146 and the additional sensor 132 may measure the fluid properties (e.g., flow rate, temperature, and/or pressure) of the compressor discharge air 78 along the flow path 150 and transmit one of the one or more input signals 138 to the control system. The control system 104 may transmit one of the one or more output signals 140 to a second valve 152 in response to the input signal 138 from the flow meter 146 and/or the additional sensor 132 to control the amount of the compressor discharge air 78 supplied to the heating system 70. For example, if the flow rate and/or temperature of the compressor discharge air 78 measured by the first flow meter 146 or additional temperature sensor 132, respectively, is outside of a desired range, the control system 104 may adjust the second valve 152 in addition to, or instead of, adjusting the first valve 128 to control the amount of the compressor discharge air 78 supplied to the heating system 70. In this way, the compressor discharge air 78 may be directed to the heating system 70, thereby heating the heating system 70, the injection system 74, the reductant 68, and the SCR 106 during start-up of the system 10. As such, electric heaters generally used to heat the ammonia injection system 65 may be replaced by fluids (e.g., the compressor discharge air 78) that are heated during operation of the system 10. Accordingly, the energy requirements associated with the electric heaters and the parasitic loss of the system 10 resulting from the use of the electric heaters may be decreased, thereby increasing the overall efficiency of the system 10 compared to systems that use the electric heaters to heat system components.

During steady-state operation of the system 10, the compressor discharge air 78 may also be used to vaporize the reductant 68 in the ammonia injection system 65. For example, during steady-state operation, a reductant tank 160 acts as a source of the reductant 68 provided to the heating system 70 via a reductant conduit 162 (representing a reductant feed path). The reductant conduit 162 may include valves 164, 168 to control an amount of the reductant 68 directed to the heating system 70. Additionally or alternatively, the reductant conduit 162 may include a pump 170 to facilitate a flow of the reductant 68 through the reductant conduit 162. The valves 164, 168 and the pump 170 may receive one of the one or more output signals 140 from the control system 104 in response to one of the one or more input signals 138 of a second flow meter 172 disposed along the reductant conduit 162. For example, if the second flow meter 172 measures a flow rate of the reductant 68 that is outside a desired range, the control system 104 may adjust the valve 168 in addition to, or instead of, the valve 164 to adjust the flow rate of the reductant 68 supplied to the AIG 64.

In certain embodiments, the control system 104 adjust the valves 128, 152, 164, 168 and/or the pumps 126, 170 such that a suitable ratio of the reductant 68 to the compressor discharge air 78 (or any other heating fluid) is achieved to effectively and efficiently vaporize and inject the reductant 78 into the SCR system 106. For example, in certain embodiments, the ratio of reductant 68 to compressor discharge air 78 may be 1:1, 1:2, 1:3, 1:5,2:1,2:5,3:1 or any other suitable ratio.

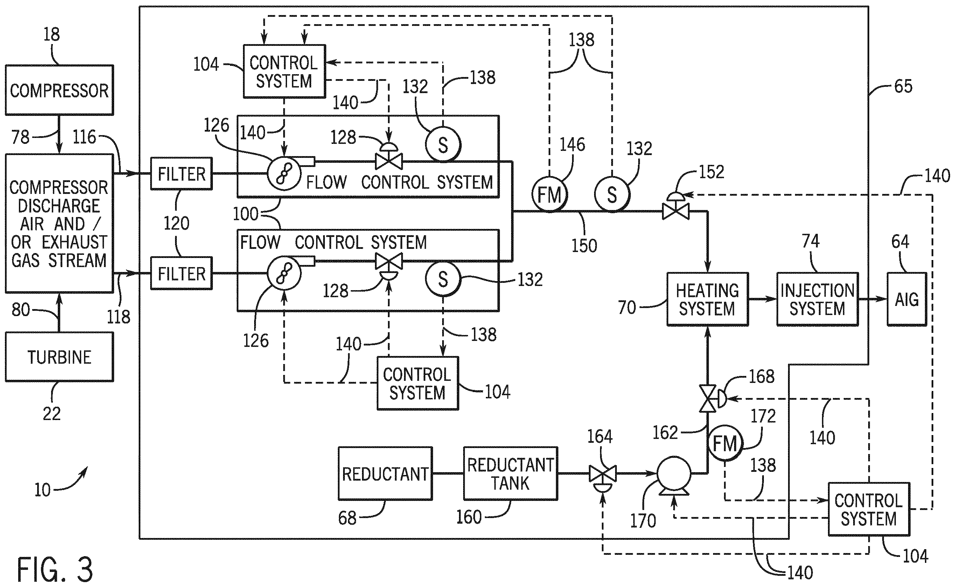

In addition to using the compressor discharge air 78 to heat and vaporized the reductant 68, present embodiments also include using the exhaust gas stream 80 and/or the air 82 for this purpose. For example, FIG. 3 illustrates an embodiment of the system 10 that uses the exhaust gas stream 80 from the turbine 22 to heat the reductant 68 during steady-state operation of the system 10. Similar to the embodiment illustrated in FIG. 2, the exhaust gas stream 80 may be directed to the heating system 70 via the conduits 116, 118, in this embodiment acting as an exhaust gas feed path and/or a compressor discharge air feed path. In certain embodiments, both the compressor discharge air 78 and the exhaust gas stream 80 may be supplied to the heating system 70. For example, the compressor discharge air 78 may flow through the first conduit 116 and the exhaust gas stream 80 may flow through the second conduit 118, or vice versa. In certain embodiments, the compressor discharge air 78 and the exhaust gas stream 80 may mix in the flow path 150 downstream of the conduits 116, 118. In other embodiments, the compressor discharge air 78 and the exhaust gas stream 80 may be mixed upstream of the conduits 116, 118 such that each conduit 116, 118 flows a mixture of the compressor discharge air 78 and the exhaust gas stream 80.

Mixing the exhaust gas stream 80 with the compressor discharge air 78 may decrease a temperature of the exhaust gas stream 80. As discussed above, the reductant 68 may be sensitive to the temperature of the exhaust gas stream. As such, the exhaust gas stream 80 may need to be cooled to a temperature that does not cause the reductant 68 to be at a temperature that is ineffective for the SCR process. The control system 104 may control the amount of the compressor air discharge air 78 that is mixed with the exhaust gas stream 80 based on the temperature of the exhaust gas stream 80, based on an amount of ammonia (e.g., reductant 68), and so forth. For example, if the temperature of the exhaust gas stream 80, as measured by the sensor 132, is above a desired temperature range, the control system 104 may adjust the valve 128 of the respective conduit 116, 118 to increase the amount of the compressor discharge air 78 flowing through the conduit 116, 118. The compressor discharge air 78 may mix with the exhaust gas stream 80 within the flow path 150, thereby decreasing the temperature of the exhaust gas stream 80 before the exhaust gas stream 80 flows into the heating system 70.

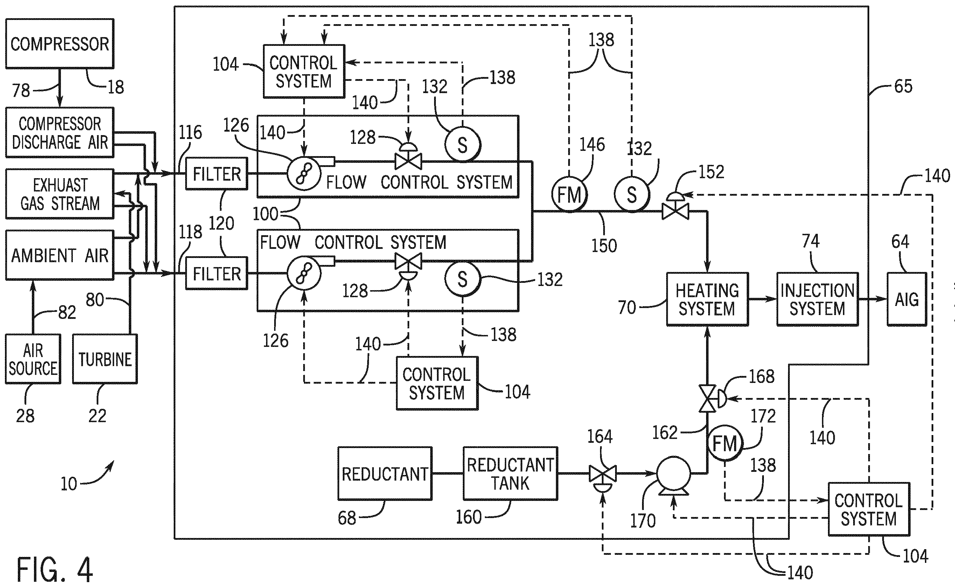

In other embodiments, the air stream 82 may be used to adjust a temperature of the compressor discharge air 78 and/or the exhaust stream 80. For example, FIG. 4 illustrates an embodiment of the system 10 that uses the compressor discharge air 78, the exhaust gas stream 80, or both, and the air stream 82 to heat the reductant 68 in the ammonia injection system 65. As discussed above, the temperature of the exhaust gas stream 80 may be above a desired temperature range. The system 10 may use the air stream 82 from the air source 28 to adjust a temperature of the exhaust gas stream 80 upstream of the heating system 70. The air stream 82 may flow through the conduit 116, 118 and mix with the exhaust gas stream 80 in the flow path 150 (e.g., in embodiments where the air stream 82 and the exhaust gas stream 80 flow through separate conduits 116, 118). Alternatively, the air stream 82 may mix with the exhaust gas stream 80 upstream of the ammonia injection system 65 such that the conduits 116, 118 each flow a mixture of the exhaust gas stream 80 and the air stream 82.

Additionally or alternatively, the air stream 82 may mix with the compressor discharge air 78. For example, the mixture of the compressor discharge air 78 and the air stream 82 may be mixed with the exhaust gas stream 80 to cool the exhaust gas stream 80 in the flow path 150 or upstream of the ammonia injection system 65. In one embodiment, the mixture of the compressor discharge air 78 and the air stream 82 may be supplied to the heating system 70 without mixing with the exhaust gas stream 80. For example, in embodiments where the exhaust gas stream 80 is not directed to the conduits 116, 118. A heat exchanger (e.g., heat exchanger 180) may be positioned along the flow path 150 to heat the mixture of the compressor discharge air 78 and the air stream 82 if, for example, the mixture is below a desired temperature range.

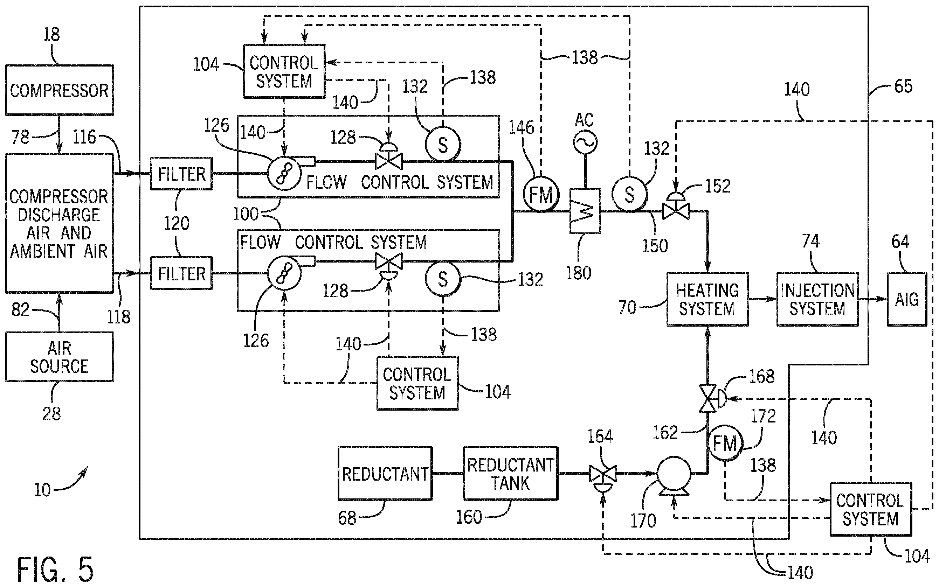

For example, FIG. 5 illustrates an embodiment of the system 10 including a heat exchanger 180 that may be used to heat the compressor discharge air 78 or a mixture of the compressor discharge air 78 and the air stream 82. In certain embodiments, a temperature of the compressor discharge air 78 may not be within a desired temperature for heating the ammonia injection system 65 and/or vaporizing the reductant 68. For example, the compressor discharge air 78 may be above or below a temperature suitable for vaporization of the reductant 68. In embodiments where the compressor discharge air 78 is above the desired temperature, the air stream 82 may be mixed with the compressor discharge air 78 to decrease the temperature of the compressor discharge air 78. The air stream 82 may decrease the temperature of the compressor discharge air 78 to a temperature below the desired temperature. Accordingly, the heat exchanger 180 may be used to adjust the temperature of the mixture of the compressor discharge air 78 and the air stream 82 to a target temperature suitable for vaporizing the reductant 68. Similarly, if the compressor discharge air 78 exiting the compressor 18 is below the desired temperature, the heat exchanger 180 may increase the temperature of the compressor discharge air 78 to the target temperature for vaporization of the reductant 68.

In certain embodiments, the heat exchanger 180 may be a multi-stage heat exchanger. The multi-stage heat exchanger may use at least a portion of the exhaust gas stream 80 to provide heat to the compressor discharge air 78 and/or the mixture of the compressor discharge air 78 and the air stream 82. In other embodiments, the heat exchanger 180 may be a small electric heater (e.g., a heater having a power output that is between approximately 100 kilowatts (kW)) and 1000 kW). In certain embodiments, the small electric heater is approximately 50% to 90% smaller than the large electric heaters (e.g., a heater having a power output of approximately 750 kW and approximately 1 mW) used to vaporize reductant in typical SCR systems. In this way, the large electric heaters used in certain gas turbine systems may be at least partially replaced with the heated fluids (e.g., the compressor discharge air 78 and the exhaust gas stream 80) generated in the gas turbine system 10. In this way the parasitic loss of the gas turbine system 10 may be decreased compared to gas turbine systems that use large electric heaters to heat components of vaporization systems (e.g., ammonia injection grid (AIG)) and vaporize the reductant.

In accordance with various embodiments described above, the gas turbine system 10 may operate more efficiently than other systems (e.g., systems that use large electric heater to heat system components). FIG. 6 illustrates a flow diagram of a method 200 by which a gas turbine system (e.g., the gas turbine system 10 described above) may heat components of a vaporization system (e.g., the ammonia injection system 65) and/or vaporize a reductant (e.g., the reductant 68) used for removing combustion byproducts from an exhaust gas stream (e.g., the cooled exhaust gas stream 52). The method 200 includes performing system start-up and exhaust purge (block 204), and directing the compressor discharge air 78 to the ammonia injection system 65 (block 206), as discussed above.

During start-up of the gas turbine system 10, various components of the gas turbine system 10 may be at or below ambient temperature or at a temperature that is insufficient to handle steady-state operations. Therefore, it may be desirable to heat portions of the gas turbine system 10. In particular, it may be desirable to heat the ammonia injection system 65 used to heat and vaporize the reductant 68. Heating the ammonia injection system 65 may mitigate condensation of the reductant 68 within the ammonia injection system 65 after the reductant 68 has undergone initial vaporization. The compressor discharge air 78 generated during the exhaust purge may have a temperature suitable for heating the ammonia injection system 65. Generally, the compressor discharge air 78 is discarded. However, by directing the compressor discharge air 78 to the ammonia injection system 65, the compressor discharge air 78 may heat the ammonia injection system 65 without the need for large electric heaters (e.g., heaters having a power output of greater than approximately 750 mW) used to heat ambient air feed into the ammonia injection system 65. As such, the parasitic loss generally associated with the use of such large heaters may be decreased, thereby decreasing the overall operational and manufacturing costs and improving the efficiency of the gas turbine system 10. Additionally, using the compressor discharge air 78 to heat the ammonia injection system 65 may decrease the time between system start-up and steady-state operation compared to system that use the large electric heaters to heat system components.

The method 200 also includes heating the reductant 68 in the heating system 70 of the ammonia injection system 65 using the compressor discharge air 78 during system start-up and exhaust purge (block 208), and transitioning from using substantially only the compressor discharge air 78 to heat the reductant 68 in the heating system 70 to using another heating fluid (e.g., the exhaust gas stream 80) or supplementing and/or replacing the compressor discharge air 78 to heat the reductant 68 in the heating system 70 once the gas turbine system 10 reaches a target operational state (block 210). For example, once the gas turbine system 10 reaches steady-state operation, the control system 104 may direct at least the portion 80 of the exhaust gas 36 from the turbine 22 to the heating system 70 of the ammonia injection system 65. The exhaust gas stream 80 may provide sufficient heat to vaporize the reductant 68 in the heating system 70. Depending on the reductant 68 used to treat the cooled exhaust gas stream 52, the exhaust gas stream 80 may be mixed with the compressor discharge air 78, the air stream 82, or both, to achieve a desired temperature for the fluid that will ultimately cause the reductant 68 to vaporize. For example, the compressor discharge air 78 and air stream 82 may be used to decrease a temperature of the exhaust gas stream 80 to a target temperature suitable for vaporizing the reductant 68 without affecting the overall effectiveness of the reductant 68 for removing combustion byproducts from the cooled exhaust gas stream 52. The control system 104 may control one or more valves (e.g., the valves 128, 152, 164, 168) to adjust a ratio of the reductant 68, the exhaust gas stream 80, and tempering fluid (e.g., the compressor discharge air 78 and/or the air stream 82) to achieve effective vaporization of the reductant 68, while providing an amount of the reductant 68 sufficient for the SCR process.

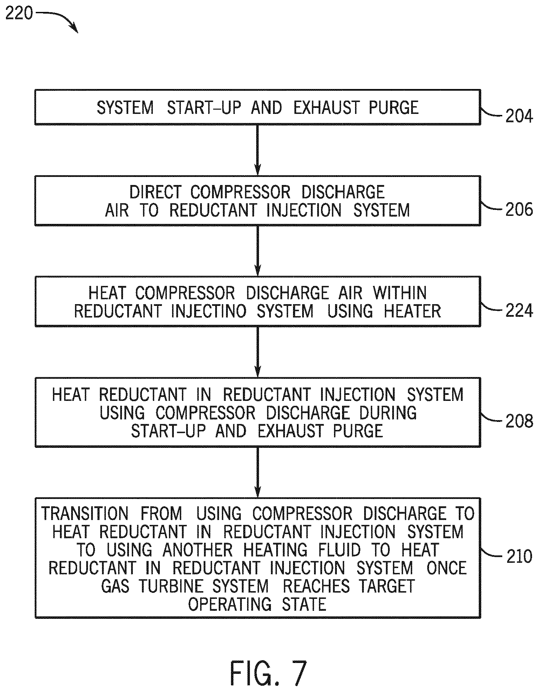

As discussed above, in certain embodiments, the gas turbine system 10 includes the heat exchanger 180 within the ammonia injection system 65. The heat exchanger 180 may be used to increase a temperature of the heating fluid (e.g., the compressor discharge air 78) to the target temperature suitable for heating and vaporizing the ammonia injection system 65 and the reductant 68, respectively. FIG. 7 illustrates a flow diagram of a method 220 in which the gas turbine system 10 may heat the ammonia injection system 65 and vaporize the reductant 68 with the compressor discharge air 78 using the heat exchanger 180. Similar to the method 200, the method 220 includes performing system start-up and exhaust purge (block 204), and directing the compressor discharge air 78 to the ammonia injection system 65 (block 206).

The method 220 also includes heating the compressor discharge air 78 within the ammonia injection system 65 using the heat exchanger 180 (block 224). For example, in certain embodiments, the compressor discharge air 78 and/or the ambient air (e.g., the air stream 82) may not be at a desired temperature for heating the ammonia injection system 65. Accordingly, the heat exchanger 180 may be used to increase the temperature of the compressor discharge air 78 and/or the air stream 82 to a temperature suitable for heating the ammonia injection system 65. The ambient air 82 may be heating within the same or a different path from the compressor discharge air 78. In other embodiments, the compressor discharge air 78 may be above a desired temperature. In this particular embodiment, the compressor discharge air 78 may be mixed with the air stream 82 to decrease the temperature of the compressor discharge air 78. The mixture of the compressor discharge air 78 and the air stream 82 may be below the desired temperature. As such, the heat exchanger 180 may be used to adjust the temperature of the mixture of the compressor discharge air 78 and the air stream 82 to the desired temperature for heating the ammonia injection system 65.

The method 220 further includes heating the reductant 68 in the ammonia injection system 65 using the compressor discharge air 78 during start-up and exhaust purge (block 208) and transitioning from using the compressor discharge air 78 to heat the reductant 68 in the heating system 70 to using another heating fluid (e.g., the exhaust gas stream 80) to heat the reductant 68 in the heating system 70 once the gas turbine system 10 reaches a target operational state (block 210), as discussed above with reference to FIG. 6.

As discussed above, the various techniques set forth herein may provide for directing a heated fluid (e.g., compressor discharge air, exhaust gas, air, and combinations thereof) to a vaporization system (e.g., AIG system) of a gas turbine system in order to heat the vaporization system and vaporize a reductant. For instance, the techniques disclosed include directing compressor discharge air generated during exhaust purge at the start of the gas turbine system to the vaporization system. The compressor discharge air may heat various components of the vaporization system, thereby mitigating condensation of the reductant within the vaporization system. The temperature of the compressor discharge air may be adjusted using ambient air and/or a heat exchanger disposed within the vaporization system. Additionally, the techniques disclosed herein include directing exhaust gas generated in the gas turbine engine to the vaporization system to vaporize the reductant. For example, after system start-up, the gas turbine system may transition from using the compressor discharge air to using the exhaust gas for heating the vaporization system and the reductant. Tempering fluid, such as compressor discharge air and/or ambient air, may be used to decrease a temperature of the exhaust gas to mitigate decreasing the effectiveness of the reductant that may be caused by the temperature of the exhaust gas exiting the gas turbine engine. The control system may adjust a ratio of the reductant to the heating fluid (e.g., the compressor discharge air and/or the exhaust gas) to achieve the desired heating and vaporization of the reductant. In this way, the gas turbine system may heat the vaporization system and vaporize the reductant without the use of large electric heaters (e.g., heaters having a power output greater than 750 kW). Accordingly, the parasitic loss and the extended system start-up times generally associated with the use of the large electric heaters may be decreased, thereby decreasing the overall operational costs and improving the efficiency of the gas turbine system compared to systems that use the large electric heaters.

This written description uses examples to disclose embodiments of the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a gas turbine engine configured to combust a fuel to generate power and an exhaust gas;
   an exhaust gas path in fluid communication with the gas turbine engine and configured to receive the exhaust gas from the gas turbine engine;
   a reductant skid fluidly coupled to the exhaust gas path, wherein the reductant skid comprises an injection system configured to supply a reductant to the exhaust gas path;
   a flow path separate from the exhaust gas path and fluidly coupling the gas turbine engine and the reductant skid, wherein the first flow path is configured to supply a first heated fluid to the reductant skid to aid in vaporization of the reductant.
2. The system of clause 1, wherein the fluid path extends from a compressor air discharge outlet to the reductant skid such that the first heated fluid comprises compressor discharge air from the gas turbine engine.
3. The system of any preceding clause, wherein the fluid path extends from an exhaust outlet of the gas turbine engine to the reductant skid such that the first heated fluid comprises the exhaust gas from the gas turbine engine.
4. The system of any preceding clause, wherein the flow path fluidly couples to a compressor section of the gas turbine engine and a heating system disposed within the reductant skid, wherein the heating system is configured to receive the first heated fluid and a flow of the reductant, and to cause heat exchange between the first heated fluid and the reductant to cause the reductant to vaporize.
5. The system of any preceding clause, wherein the flow path is fluidly coupled to a turbine section of the gas turbine engine and a heating system disposed within the reductant skid, wherein the heating system is configured to receive the first heated fluid and a flow of the reductant, and to cause heat exchange between the first heated fluid and the reductant to vaporize the reductant.
6. The system of any preceding clause, comprising a control system comprising one or more tangible, non-transitory, machine-readable media having instructions to control a flow of the first heated fluid from a compressor section of the gas turbine engine to the injection system during start-up of the gas turbine engine, wherein the first heated fluid comprises compressor discharge air.
7. The system of any preceding clause, wherein the one or more tangible, non-transitory, machine-readable media further includes instructions to transition from flowing the compressor discharge air to the reductant skid to flowing a second heated fluid to the reductant skid during steady-state operation of the gas turbine engine.
8. The system of any preceding clause, wherein the second heated fluid comprises an exhaust gas generated in the gas turbine engine.
9. The system of any preceding clause, wherein the system is a simple cycle system.
10. A system, comprising:
   a gas turbine engine configured to combust a fuel and to generate an exhaust gas;
   an exhaust gas path configured to receive the exhaust gas from the gas turbine engine;
   a reductant skid fluidly coupled to the exhaust gas path, wherein the reductant skid comprises a heating system configured to vaporize a reducing agent and an injection system configured to supply the vaporized reducing agent to the exhaust gas path;
   a first flow path separate from the exhaust gas path and fluidly coupling a first section of the gas turbine engine and the reductant skid, wherein the first flow path is configured to supply a first heated fluid to the reductant skid; and
   a second flow path separate from the exhaust gas path and the first flow path, wherein the second flow path is fluidly coupled to a second section of the gas turbine engine and to the reductant skid, wherein the second flow path is configured to supply a second heated fluid to the reductant skid.
11. The system of any preceding clause, wherein the second heated fluid comprises at least a portion of the exhaust gas from the gas turbine engine.
12. The system of any preceding clause, comprising a heat exchanger disposed within the reductant skid along a third flow path fluidly coupled to the first and the second flow paths, wherein the heat exchanger is configured to heat the first heated fluid.
13. The system of any preceding clause, wherein the heat exchanger comprises an electric heater having a power output of approximately 100 kilowatts and approximately 1000 kilowatts.
14. The system of any preceding clause, wherein the first flow path extends from a compressor discharge outlet disposed within the first section of the gas turbine engine to the reductant skid such that the first heated fluid comprises compressor discharge air or a mixture of the compressor discharge air and ambient air.
15. The system of any preceding clause, comprising, one or more tangible, non-transitory, machine-readable media comprising instructions to:
   supply the first heated fluid from the first section of the gas turbine engine to the reductant skid during start-up of the gas turbine engine, wherein the first heated fluid comprises compressor discharge air; and
   supplementing or replacing the first heat fluid with the second heated fluid from the second section of the gas turbine engine to the reductant skid during steady-state operation of the gas tubine engine, wherein the second heated fluid comprises a portion of the exhaust gas.
16. A method, comprising:
   flowing a first fluid from a first section of a gas turbine engine through a first flow path fluidly coupling the first section to a reductant skid, wherein the reductant skid is fluidly coupled to an exhaust flow path configured to receive exhaust gas generated in the gas turbine engine;
   heating the reductant skid using the first fluid;
   flowing a second fluid through a second flow path fluidly coupling a second section of the gas turbine engine to the reductant skid to supplement or replace the first fluid; and
   vaporizing a reductant within the reductant skid with the second fluid.
17. The method of any preceding clause, wherein the first fluid comprises compressor discharge air generated in the first section, and wherein the first section is a compressor section of the gas turbine engine.
18. The method of any preceding clause, comprising heating the compressor discharge air with a heat exchanger disposed within the reductant skid.
19. The method of any preceding clause, wherein the second fluid comprises exhaust gas generated in the sectond section, wherein the second section is a combustor section or a turbine section of the gas turbine engine.
20. The method of any preceding clause, comprising supplementing or replacing the first fluid during steady-state operation of the gas turbine engine.

## Claims

1. A system (10), comprising:
a gas turbine engine (12) configured to combust a fuel (32) to generate power and an exhaust gas (36);
an exhaust gas path (42) in fluid communication with the gas turbine engine (12) and configured to receive the exhaust gas (36) from the gas turbine engine (12);
a reductant skid (65) fluidly coupled to the exhaust gas path, wherein the reductant skid comprises an injection system configured to supply a reductant to the exhaust gas path;
a flow path separate from the exhaust gas path and fluidly coupling the gas turbine engine and the reductant skid, wherein the first flow path is configured to supply a first heated fluid to the reductant skid to aid in vaporization of the reductant.

2. The system of claim 1, wherein the fluid path extends from a compressor air discharge outlet to the reductant skid such that the first heated fluid comprises compressor discharge air from the gas turbine engine.

3. The system of claim 1, wherein the fluid path extends from an exhaust outlet of the gas turbine engine to the reductant skid such that the first heated fluid comprises the exhaust gas from the gas turbine engine.

4. The system of claim 1, 2 or 3 wherein the flow path fluidly couples to a compressor section of the gas turbine engine and a heating system disposed within the reductant skid, wherein the heating system is configured to receive the first heated fluid and a flow of the reductant, and to cause heat exchange between the first heated fluid and the reductant to cause the reductant to vaporize.

5. The system of claim 1, 2 or 3 wherein the flow path is fluidly coupled to a turbine section of the gas turbine engine and a heating system disposed within the reductant skid, wherein the heating system is configured to receive the first heated fluid and a flow of the reductant, and to cause heat exchange between the first heated fluid and the reductant to vaporize the reductant.

6. The system of any preceding claim, comprising a control system comprising one or more tangible, non-transitory, machine-readable media having instructions to control a flow of the first heated fluid from a compressor section of the gas turbine engine to the injection system during start-up of the gas turbine engine, wherein the first heated fluid comprises compressor discharge air.

7. The system of claim 6, wherein the one or more tangible, non-transitory, machine-readable media further includes instructions to transition from flowing the compressor discharge air to the reductant skid to flowing a second heated fluid to the reductant skid during steady-state operation of the gas turbine engine.

8. The system of claim 7, wherein the second heated fluid comprises an exhaust gas generated in the gas turbine engine.

9. The system of any preceding claim, wherein the system is a simple cycle system.
